# EUROPÄISCHE PATENTSCHRIFT

(11) **EP 1 562 792 B1**
(45) Veröffentlichungstag und Bekanntmachung des Hinweises auf die Patenterteilung: **24.05.2006**
(21) Anmeldenummer: 03770914.4
(22) Anmeldetag: 17.10.2003
(51) Int. Cl.: B60R 21/01

(54) **VORRICHTUNG UND VERFAHREN ZUM ERKENNEN DER POSITION EINER PERSON AUF EINEM SITZ EINES KRAFTFAHRZEUGS**
DEVICE AND METHOD FOR DETECTING THE POSITION OF A PERSON ON A SEAT OF A MOTOR VEHICLE
DISPOSITIF ET PROCEDE POUR RECONNAITRE LA POSITION D'UNE PERSONNE SUR UN SIEGE DE VEHICULE

(30) Priorität: 20.11.2002 DE 10254201
(43) Veröffentlichungstag der Anmeldung: 17.08.2005
(73) Patentinhaber: SIEMENS AKTIENGESELLSCHAFT, 80333 München (DE)
(72) Erfinder: HOFBECK, Klaus, 92318 Neumarkt (DE); KLEMENT, Thomas, 93059 Regensburg (DE); RÖSEL, Birgit, 93055 Regensburg (DE); STIELOW, Arnd, 93059 Regensburg (DE)
(86) Internationale Anmeldenummer: PCT/DE2003/003454
(87) Internationale Veröffentlichungsnummer: WO 2004/045913

(56) Entgegenhaltungen:
- WO-A-01/94157
- DE-A- 19 957 536
- DE-A- 19 957 557
- US-B1- 6 199 904

## Beschreibung

Die Erfindung betrifft eine Vorrichtung und ein Verfahren zum Erkennen der Position einer Person auf einem Sitz eines Kraftfahrzeugs, um beispielsweise abhängig von der Position die Auslösung des Airbags im Falle eines Unfalls zu steuern.

Eine bekannte Vorrichtung, US 6,199,904 B1, welche als nächstliegender Stand der Technik angesehen wird, weist einen Transceiver mit einem HF-Sender (Hochfrequenz-Sender) und einem HF-Empfänger auf. Der Sender sendet HF-Strahlen zu einem Fahrzeugsitz, der eine reflektierende Oberfläche aufweist. Durch die Oberfläche werden die Strahlen reflektiert und zu dem Empfänger übertragen. Der Empfänger empfängt die reflektierten Signale und wertet die Intensität der empfangenen Signale aus. Wenn eine Person auf einem Sitz Platz genommen hat, so werden die Signale durch den Körper stark gedämpft, so dass dann eine Person als auf dem Sitz befindlich sofort erkannt werden kann.

Firmenintern wurde vorgeschlagen, als Transceiver einen Transceiver eines Zugangskontroll- und Fahrzeugstartsystems zu verwenden. Mit diesen kann anhand der Laufzeit der Signale die Entfernung zwischen Transceiver und Reflektor ermittelt werden. Aus der Kenntnis der Lage und Position des Sitzes können dann die von dem Reflektor reflektierten Signale von sonstigen Streusignalen unterschieden werden und anhand der Intensitäten der empfangenen Signale sicher festgestellt werden, ob eine Person auf dem Sitz Platz genommen hat.

Allgemein ist ein Transceiver für ein Diebstahlschutzsystem eines Kraftfahrzeugs bereits bekannt (DE 199 57 536 A1), bei dem die Position eines Codegebers (der als modulierender Reflektor dient) ermittelt wird. Nur bei zugelassener Position und berechtigtem Code wird der Zugang zum Kraftfahrzeug freigegeben oder eine Wegfahrsperre gelöst.

Firmenseitig wurde auch vorgeschlagen als Reflektoren Backscatter-Systeme zu verwenden, bei denen die reflektierten Signale mit einem Code moduliert sind. Solche Backscatter sind beispielsweise aus der Offenlegungsschrift DE 199 57 557 A1 bekannt. Dabei bestehen die Backscatter aus OFW-Elementen (O-berflächenwellen), die intern variabel modulierende Reflektoren aufweisen. Durch die Reflektoren wird ein Signal mit einem Code infolge von Reflexion an bestimmten Orten versehen und zurückgesendet.

Bei den bekannten Vorrichtungen zum Erkennen der Position einer Person auf einem Sitz eines Kraftfahrzeugs besteht der Nachteil, dass nicht erkannt werden kann, ob eine Person auf dem Fahrzeugsitz Platz genommen hat oder ob sie sich nur vorgebeugt oder schräg auf dem Sitz sitzend aufhält. Es wird lediglich die Intensität der empfangenen Signale verwendet, d.h. es wird nur die Dämpfung beim Durchgang der Strahlung durch einen menschlichen Körper ausgenutzt. Mehrfach gestreute oder reflektierte Signale können als solche nicht erkannt werden. Es kann auch nicht unterschieden werden, ob das empfangene Signal von dem Sitz oder von einem anderen Gegenstand reflektiert wird.

Aufgabe der Erfindung ist es, eine Vorrichtung und ein Verfahren zum Erkennen der Position einer Person auf einem Sitz eines Kraftfahrzeugs zu schaffen, bei der auch eine Diagnose über das korrekte Funktionieren der Vorrichtung vorgenommen werden kann.

Diese Aufgabe wird erfindungsgemäß durch eine Vorrichtung zum Erkennen der Position einer Person auf einem Sitz eines Kraftfahrzeugs mit den Merkmalen der Patentanspruch 1 und 7 sowie durch ein Verfahren mit den Merkmalen von Patentanspruch 9 gelöst.

Dabei weist die Vorrichtung einen HF-Sender auf, der im Fahrgastraum angeordnet ist und HF-Signale aussendet. Ein oder mehrere Reflektoren sind in jeweils einem Fahrzeugsitz angeordnet. Die Reflektoren reflektieren die empfangenen HF-Signale zurück zu einem HF-Empfänger. Der HF-Empfänger wertet anhand der Signallaufzeit der Signale und/oder des in den HF-Signalen enthaltenen Codes aus, ob ein Sitz belegt ist. Darüber hinaus kann auch die genaue Position einer auf dem Sitz befindlichen Person erkannt werden (ob und wieweit die Person vorgelehnt ist oder seitlich sitzt).

Zum Zwecke der Diagnose der Vorrichtung sind in dem Sitz ein oder mehrere Diagnosereflektoren angeordnet. Die Diagnosereflektoren sind derart am Rande eines jeden Sitzes angeordnet, dass die Reflektoren möglichst nicht durch den Körper einer Person abgedeckt werden, so dass das HF-Signal weitgehend ungedämpft an dem Diagnosereflektor ankommt und die Reflexion zurück zum HF-Empfänger weitgehend ungedämpft dort ankommt.

Diese Vorrichtung hat den Vorteil, dass sie eigenständig und sicher erkennt, ob einer der normalen Reflektoren ausgefallen ist, wenn ein Signal empfangen wird, das von einem Diagnosereflektor zurückreflektiert wurde. Es ist also eine einfache Diagnose der Vorrichtung selber möglich. Die Diagnosereflektoren können in derselben Technologie aufgebaut sein, wie die restlichen Reflektoren. Für die Reflektoren wird keine Adaption, Kalibrierung oder Eichung benötigt. Die Diagnosereflektoren können klein, leicht und robust aufgebaut werden. Mit der Vorrichtung können nicht nur Personen auf einem Sitz erkannt werden, sonder ob sich auch andere Gegenstände auf dem Sitz befinden oder nicht.

Statt der Reflektoren können auch HF-Sender oder HF-Empfänger in den Sitzen angeordnet sein, wobei dann eine unidirektionale Übertragung zwischen HF-Sender und HF-Empfänger stattfindet. Diagnosesender oder Diagnoseempfänger sind dann ebenfalls in den Sitzen angeordnet. Mit diesen ist eine Diagnose der Vorrichtung möglich.

Durch das Verfahren ist gleichzeitig sowohl eine Diagnose als auch ein Durchführen des Erkennens der Position einer Person auf einem Sitz möglich. Durch die Diagnose kann festgestellt werden, ob die Vorrichtung noch ordnungsgemäß arbeitet, da von den Diagnosereflektoren, Diagnosesendern oder Diagnoseempfängern immer ein Diagnosesignal letztendlich empfangen und ausgewertet werden müsste.

Vorteilhafte Ausgestaltungen der Erfindung ergeben sich aus den Unteransprüchen.

Die Diagnosereflektoren sind am Rande eines Sitzes derart angeordnet sind, dass zwischen Sender, Reflektor und Empfänger eine weitestgehend ungedämpfte Verbindung besteht und dass die Diagnosereflektoren drahtlos oder drahtgebunden mit den Reflektoren verbunden sind. Der Diagnosereflektor ist vorzugsweise an einer Stirnseite der Rückenlehne, an einer Stirnseite der Sitzfläche des Fahrzeugsitzes oder seitlich in der Kopfstütze angeordnet. Bei entsprechender Positionierung des HF-Senders, der HF-Signale aussendet, werden - bei randseitiger Lage der Diagnosereflektoren - die Übertragungswege hin zum Diagnosereflektor nicht oder nur teilweise durch den Körper einer Person auf dem Fahrzeugsitz abgedeckt, so dass die HF-Signale unmittelbar und ungedämpft von dem HF-Sender zu dem Diagnosereflektor gesendet und von dort durch Reflexion oder Streuung zurückgesendet werden können.

Die Reflektoren und auch die Diagnosereflektoren können die HF-Signale mit einem Code moduliert zurücksenden. Somit kann eindeutig erkannt werden, von welchem Reflektor das empfangene Signal stammt. Anhand der Signallaufzeit kann die tatsächliche Position des Reflektors ermittelt werden (die tatsächliche Position hängt unter anderem von der Stellung des Sitzes und der Neigung der Sitzlehne ab). Es kann zudem überprüft werden, ob das empfangene Signal einen Umweg, d.h. durch Mehrfachreflexion, auf seinem Weg vom Sender über den Reflektor zum Empfänger genommen hat.

Vorteilhaft sind der HF-Sender und der HF-Empfänger als ein Teil, und zwar als so genannter Transceiver, ausgebildet. Der Transceiver kann auch für ein ohnehin vorhandenes Zugangskontroll- und Fahrzeugstartsystem (Diebstahlschutzsystem) verwendet werden, da auch dort HF-Signale ausgesendet und empfangen sowie die Entfernung/Position eines Codegebers mit Hilfe einer Laufzeitmessung ermittelt werden. Ein solches Diebstahlschutzsystem ist mit seinen Elementen beispielhaft in der Offenlegungsschrift DE 199 57 536 A1 beschrieben, worauf hier ausdrücklich Bezug genommen werden soll. Die nähere Kenntnis eines solchen Diebstahlschutzsystems wird daher für den Fachmann als bekannt vorausgesetzt.

Die Diagnosereflektoren sind über einen Schalter, beispielsweise einen Transistor, der als Schalter angesteuert wird, seriell oder parallel mit den anderen Reflektoren elektrisch verbunden. Somit kann der Diagnosereflektor jederzeit zeitgleich mit den Reflektoren oder nur in einem Diagnosemodus betrieben werden, um zu erkennen, ob überhaupt Signale von dem Transceiver empfangen werden, die von den Diagnosereflektoren zurückgesendet wurden.

Da die Diagnosereflektoren die HF-Signale weitgehend ungedämpft empfangen, kann die Intensität während der Diagnose beim Aussenden soweit reduziert werden, dass weniger Strahlung in Richtung Sitz und damit in Richtung einer Person ausgesendet wird. Wenn der Diagnosereflektor in Serie mit dem gewöhnlichen Reflektor geschaltet ist, so kann auch im Normalbetrieb sofort erkannt werden, ob die Vorrichtung ausgefallen ist, wenn Signale empfangen werden, die dem Diagnosereflektor zuordenbar sind.

Der .Diagnosereflektor kann auch als Messpunkt dienen, um beispielsweise die tatsächliche momentane Position des Sitzes zu bestimmen. Die ermittelte Position kann dann an ein anderes System im Fahrzeug, beispielsweise an ein Airbagsystem weitergegeben werden. Die ermittelte Position der Person kann auch für sonstige Steuergeräte bereitgestellt werden, durch die Komfortfunktionen (benutzerindividuelles Einstellen der Sitze, Einstellen der Spiegel, usw.) im Fahrzeug gesteuert werden.

Der Diagnosereflektor kann als modulierender Reflektor ausgebildet sein, wodurch ein empfangenes Signal beispielsweise mit Hilfe eines OFW-Elements (Oberflächenwelle) mit einem Code moduliert zurückgesendet wird. Es sind auch andere Möglichkeiten der modulierten Reflexion des HF-Signals möglich.

Vorteilhafterweise wird der HF-Empfänger dazu verwendet, die aktuelle Position einer Person auf dem Fahrzeugsitz zu ermitteln und diese Position an ein Airbagsystem weiterzuleiten, wodurch die Auslösung des Airbags im Falle eines Unfalls gesteuert werden kann. Da ein Airbagsystem ein für eine Person sicherheitskritisches System ist, ist es wichtig, dass die Sensoren und Reflektoren richtig funktionieren und jederzeit überprüft werden können sowie nicht ausfallen dürfen. Diese Sicherheit wird durch eine Diagnose mit den Diagnosereflektoren gewährleistet.

Ausführungsbeispiele der Erfindung werden im Folgenden anhand der schematischen Zeichnungen näher erläutert. Es zeigen:
- Figur 1: eine Seitenansicht eines Fahrzeugsitzes mit darauf befindlicher Position mit einer erfindungsgemäßen Vorrichtung und
- Figur 2: eine Draufsicht auf einen Fahrzeugsitz mit einer Vorrichtung gemäß Figur 1.

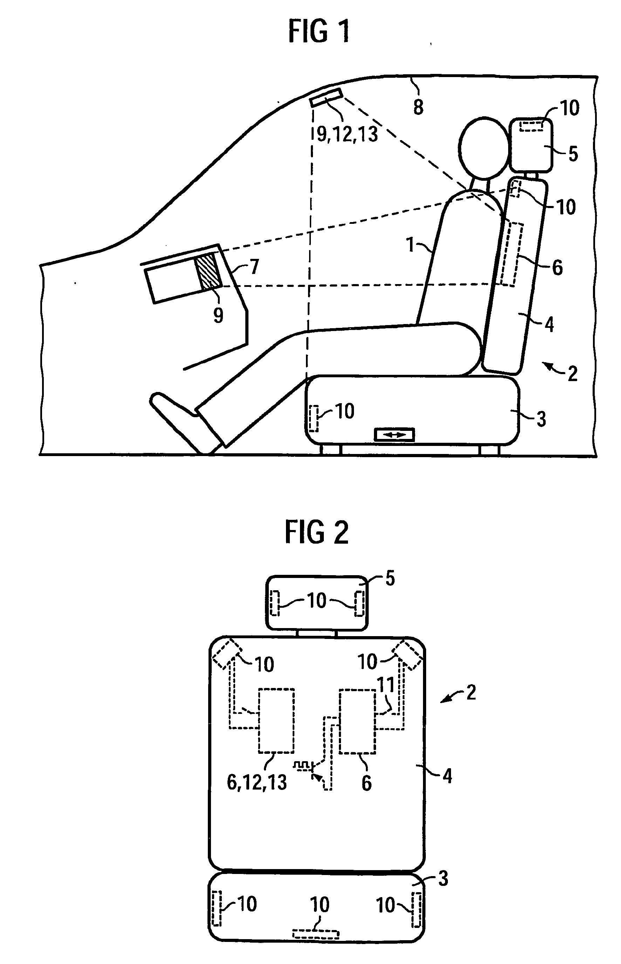

Eine Vorrichtung zum Erkennen der Position einer Person 1 (Figur 1) auf einem Sitz 2 eines Kraftfahrzeugs weist einen Fahrzeugsitz 2 mit einer Sitzfläche 3, einer Rückenlehne 4 und einer Kopfstütze 5 auf. In diesem Sitz 2 sind in Bereichen, in denen eine Person 1 den Sitz 2 beim Sitzen üblicherweise berührt, Reflektoren 6 angeordnet. Im Armaturenbrett 7, in der Mittelkonsole, im Dachhimmel 8 und/oder im Rückspiegel können sich Transceiver 9 mit einem HF-Sender und einem HF-Empfänger befinden. Von den HF-Sendern werden HF-Signale in Richtung auf den Fahrzeugsitz 2 ausgesendet. Diese Signale werden von Reflektoren 6 in den Sitzen unmittelbar oder mit einem Code moduliert reflektiert. Die HF-Empfänger empfangen die Signale und werten diese anhand der empfangenen Intensität, der Signallaufzeit und/oder dem in dem Signal enthaltenen Code aus.

Wenn sich eine Person 1 oder ein sperriger Gegenstand auf einem Sitz 2 befindet, so decken diese in der Regel die Reflektoren 6 zumindest teilweise ab. HF-Sender/HF-Empfänger und Reflektoren 6 sind so angeordnet, dass der direkte Übertragungsweg dazwischen normalerweise durch eine Person 1 auf dem Sitz 2 hindurchgeht. Die HF-Signale, die von den HF-Sendern ausgesendet werden, durchdringen daher den Körper und werden dabei gedämpft.

Auch die von den Reflektoren 6 zurückreflektierten Signale gehen zumindest teilweise durch den Körper der Person 1 und werden ebenfalls gedämpft. Somit gelangen die Signale stark gedämpft zu den HF-Empfängern. Anhand der Intensität, der Laufzeitmessung und/oder des zurückreflektierten Codes kann dann genau ermittelt werden, ob sich eine Person 1 auf dem Sitz 2 befindet und in welcher Position sie sich befindet. Mit Hilfe des Codes und/oder der Laufzeitmessung können andere Signale, die durch Mehrfachreflexionen zu dem Empfänger gelangt sind, bei der Auswertung unberücksichtigt bleiben.

Um eine Selbstdiägnose der Vorrichtung durchführen zu können, sind in den Sitzen 2 randseitig Diagnosereflektoren 10 angeordnet. Diese Diagnosereflektoren 10 sind in Bereichen am Rande eines Sitzes 2 angeordnet, und zwar dort, wo der menschliche Körper einer auf dem Fahrzeugsitz 2 befindlichen Person 1 die Diagnosereflektoren 10 möglichst nicht abdeckt, d.h. der Übertragungsweg zwischen HF-Sender/-Empfänger und Diagnosereflektor 10 geht nicht durch den Körper und wird daher nicht gedämpft.

Die Diagnosereflektoren 10 können beispielsweise im Halsbereich oder im Unterschenkelbereich bei auf dem Sitz 2 befindlicher Person 1 im randseitig in jedem Sitz 2 angeordnet sein. Demnach sind die Diagnosereflektoren 10, beispielsweise wie in Figur 2 dargestellt, in den oberen Ecken der Rückenlehne 4 oder links und rechts außen in der vorderen Sitzfläche 3 oder Stirnseite der Sitzfläche 3 angeordnet. In diesen Bereichen werden üblicherweise die Übertragungsweg von den Körpern der Personen beim Sitzen nicht "verdeckt".

Vorteilhaft ist es, zwei Diagnosereflektoren 10 symmetrisch links und rechts in den Ecken der Sitzlehne oder links und rechts in der Stirnseite der Sitzfläche 3 anzuordnen. Dadurch wird dann immer noch zumindest ein Diagnosereflektor 10 mit HF-Signalen bestrahlt, wenn sich die Person 1 seitlich versetzt auf den Sitz 2 befindet.

Die Diagnosereflektoren 10 können über einen Schalter 11, der beispielsweise als Transistor ausgebildet ist, mit den Reflektoren 6 verbunden werden. Im Normalbetrieb können die Diagnosereflektoren 10 hinzugeschaltet werden. Da sie in der Regel die HF-Signale ungedämpft empfangen und die Reflexionen davon auch weitgehend ungedämpft zurück zu den HF-Empfänger gelangen, kann festgestellt werden, ob überhaupt ein entsprechendes Signal empfangen wird. Ist dies nicht der Fall, so ist es wahrscheinlich, dass alle Reflektoren 6 inklusive Diagnosereflektoren 10 ausgefallen sind, beispielsweise weil die Spannungsversorgung in dem Sitz 2 unterbrochen ist, oder dass alle Reflektoren 6 inklusive Diagnosereflektoren 10 von einer Person 1 oder einem Gegenstand vollständig abgedeckt sind.

Vorteilhaft ist es, die Diagnosereflektoren 10 ebenso wie die normalen Reflektoren 6 als modulierende Reflektoren 6, 10 in der gleichen Technologie auszubilden. So können die Reflektoren 6 die empfangenen Signale mit einer Frequenz von 10 kHz moduliert zurücksenden, während die Diagnosereflektoren 10 die Signale mit einer Frequenz von 20 kHz moduliert zurücksenden.

Es kann auch jeder Diagnosereflektor 10 seinen eigenen Code aufweisen, der dann zurück zu den HF-Empfänger gesendet wird. Dadurch ist feststellbar, an welchem der Diagnosereflektoren 10 ein Signal moduliert reflektiert wurde. Selbst wenn Signale empfangen werden, die zuvor mehrfach an Reflektoren 6 und sonstigen Gegenständen im Kraftfahrzeug reflektiert wurden, können anhand der Intensität und/oder der Signallaufzeit und/oder des Codes die Signale einem Diagnosereflektor 10 eindeutig zugeordnet werden.

Als Reflektoren 6, 10 können so genannte Backscatter verwendet werden. Bei diesen unterscheidet man zwischen einem passiven Backscatter, einem semipassiven Backscatter, einem semiaktiven Backscatter oder einem aktiven Backscatter.

Ein passiver Backscatter weist eine reflektierende Oberfläche auf. Durch einen ε_{R}-Sprung (Sprung der relativen Dielektrizitätskonstanten ε_{R}) oder Änderung der elektrischen Leitfähigkeit weist der Feldwellenleitwiderstand einen Sprung auf. Es besteht ein konstanter Rückstreuquerschnitt, so dass keine Modulation erfolgt (wie ein Spiegel).

Ein semipassiver Backscatter weist ebenfalls eine reflektierende Oberfläche auf. Allerdings liegt ein zeitlich veränderlicher Rückstreuquerschnitt vor (z.B. durch einen Schalttransistor). Es findet jedoch keine Signalverstärkung und keine Signalgeneration bei der Reflektion statt.

Der semiaktive Backscatter ist ähnlich dem semipassiven Backscatter, weist aber eine Verstärkung des zu reflektierenden Signals auf.

Bei einem aktiven Backscatter wird das zu reflektierende Signal im Backscatter erzeugt. Hierzu weist der aktive Backscatter einen eigenen Oszillator auf, durch den eine phasenkohärentes Signal zurückgestrahlt wird.

Mit dieser erfindungsgemäßen Vorrichtung kann eigenständig und sicher erkannt werden, ob ein normaler Reflektor 6 ausgefallen ist. Die Diagnosereflektoren 10 können immer zugeschaltet sein, so dass eine zu dem Normalbetrieb zeitgleiche Diagnose der Vorrichtung vorgenommen wird. Für die Diagnose können auch Zeitfenster vorgesehen sein, in denen dann nur die Diagnose durchgeführt wird.

Die Diagnosereflektoren 10 werden über die normalen Reflektoren 6 mit Energie versorgt. Im Betrieb kann dann anhand des empfangenen Signals (Code, Signallaufzeit und/oder Intensität) erkannt werden, ob ein Fehler vorliegt. Werden die Reflektoren 6 im Sitz 2 bei Stromausfall nicht mit Energie versorgt, so wird kein Signal reflektiert, auch nicht von einem Diagnosereflektor 10.

Der Diagnosereflektor 10 ist derart am oder im Sitz 2 positioniert, dass er durch eine sitzende Person 1 möglichst nicht oder weitgehend nicht abgedeckt wird. Ein solcher Diagnosereflektor 10 kann einfach ausgestaltet und kleine Abmessungen haben, so dass er an jeder beliebigen Stelle, vorzugsweise im Stirnbereich der Rückenlehne 4 oder Sitzfläche 3, an der Kopfstütze 5 oder randseitig am Fahrzeugsitz 2 angeordnet sein kann.

Da die Signale zwischen dem Transceiver 9 und dem Diagnosereflektor 10 unmittelbar hin und her übertragen werden, kann mit Hilfe einer Laufzeitmessung die genaue Position des Sitzes 2 bestimmt werden. Da die Signale beim Durchgang durch einen menschlichen Körper stark gedämpft werden, können sogar Beugungseffekte zum Erkennen einer vorverlagerten Position einer Person 1 ausgenutzt werden. Durch die Beugung der Signale/Strahlung gelangt immer noch ein - zwar geringerer - Teil der Signale leicht gedämpft zu dem Reflektor 6. Anhand der Intensität des reflektierten Signals kann der Neigungswinkel oder die Vorverlagerung der Person 1 ermittelt werden.

Diese Positionsinformationen kann anderen Systemen im Kraftfahrzeug zur Verfügung gestellt werden. Solche anderen Systeme können beispielsweise ein Airbagsystem, ein Sitzverstellungssystem, das auf die individuellen Einstellungen eines Benutzers abgestimmt ist, ein Spiegelverstellsystem etc. sein.

Werden semi-passive Backscatter verwendet, so wird nur sehr wenig Strom durch die Reflektoren 6 inklusive Diagnosereflektoren 10 verbraucht (kleiner als 1 µA). Die Diagnosezeiten sind auch sehr gering und liegen beispielsweise im Millisekundenbereich. Mit diesen Diagnosereflektoren 10 ist ein gleichzeitiger Betrieb der Diagnose und des Normalbetriebs, d.h. des Erkennens der Position einer Person 1 auf einem Sitz 2, möglich. Denn anhand des eigenen Codes oder auch der vordefinierten Signallaufzeit (als Referenzwert) zwischen Reflektor 6 und Transceiver 9 kann das von dem Diagnosereflektor 10 reflektierte HF-Signal eindeutig als solches erkannt werden und entsprechend zur Auswertung zur Verfügung stehen.

Vorzugsweise werden die HF-Signale bei einer Trägerfrequenz von 2,4 GHz ausgesendet. Selbstverständlich können auch andere Frequenzen im HF-Bereich (433 MHz oder 868 MHz) oder Mikrowellen-Bereich (24 GHz) verwendet werden und mit einer solchen Intensität ausgesendet werden, die für den Menschen unschädlich sind.

HF-Sender und -Empfänger müssen nicht unbedingt an einem Ort oder in einem gemeinsamen Gehäuse angeordnet sein. Wichtig ist es, dass der HF-Empfänger reflektierte HF-Signale empfängt und diese an eine interne Auswerteeinheit weitergibt, die dann eine Diagnose der Vorrichtung oder das Ermitteln der Position einer Person 1 auf einem Fahrzeugsitz 2 vornimmt.

Statt der Reflektoren 6 kann auch nur eine unidirektionale Übertragung zum Erkennen einer Sitzposition oder für die Diagnose verwendet werden. Dann befindet sich entweder ein HF-Sender 12 oder ein HF-Empfänger 13 im Sitz 2, während das Gegenstück fahrzeugseitig so angeordnet ist, dass im Normalfall der Übertragungsweg durch einen auf einem Sitz 2 platzierten Körper geht. Diagnosesender oder Diagnoseempfänger sind dann randseitig so angeordnet, dass der Übertragungsweg im Normalfall frei ist. Von der Signalauswertung funktionieren diese Vorrichtungen genau so wie die Vorrichtungen mit Reflektor 6 und Diagnosereflektor 10.

Unter der Diagnose ist das Erkennen eines Fehlers, wie beispielsweise eines Stromausfalls oder einer Leitungsunterbrechung bei den sitzseitigen Komponenten zu verstehen. Nur wenn die Vorrichtung einwandfrei arbeitet, können die evaluierten Ergebnisse für entsprechende Steuerungszwecke weiter verwendet werden.

Bei der erfindungsgemäßen Vorrichtung werden die übertragenen Signale, die durch einen Körper auf einem Sitz 2 gedämpft oder ungedämpft von einem HF-Sender 12 zu einem HF-Empfänger (und gegebenenfalls von einem Reflektor 6 beeinflusst werden) übertragenen werden, hinsichtlich ihrer in ihnen enthaltenen Codes und/oder ihrer Signallaufzeit und/oder ggf. ihrer Intensität ausgewertet. Dadurch ist es möglich eine Person 1 oder ein sperriges Objekt auf einem Sitz 2 (vorzugsweise Vordersitze eines Kraftfahrzeugs) zu erkennen. Mittels randseitig auf den Sitzen angeordneter Elemente (Diagnosereflektor 10 oder HF-Sender 12 / HF-Empfänger 13) wird eine Diagnose der Vorrichtung durchgeführt, da sich durch diese die Signallaufzeit, der Code oder die Intensität der von diesen gesendeten Signale gegenüber den Signalen ohne Diagnose ändern.

Die Position der Reflektoren 6 oder von Sender oder Empfänger im Sitz 2 wird so gewählt, dass der HF-Signal-Übertragungsweg zwischen Transceiver 9 und Reflektor 6 bzw. zwischen Sender und Empfänger möglichst durch den Körper einer auf dem Sitz 2 befindlichen Person 1 abgedeckt ist (damit die Person auf dem Sitz 2 erkannt werden kann). Die Diagnosereflektoren 10 hingegen werden so im Sitz 2 positioniert, dass der HF-Signal-Übertragungsweg möglichst frei ist.

## Patentansprüche

1. Vorrichtung zum Erkennen der Position einer Person auf einem Sitz eines Kraftfahrzeugs mit
- zumindest einem HF-Sender, der im Fahrgastraum angeordnet ist und HF-Signale aussendet,
- einem oder mehreren Reflektoren (6), die in einem Fahrzeugsitz (2) angeordnet sind, wobei die Reflektoren (6) die HF-Signale reflektieren,
- einem oder mehreren Diagnosereflektoren (10), die mit den Reflektoren (6) zum Zwecke der Diagnose der Vorrichtung verbindbar sind, und mit
- einem HF-Empfänger, der HF-Signale empfängt und aus der Signallaufzeit zwischen Aussenden und Empfangen und/oder aus einem in dem empfangenen HF-Signal enthaltenen Code der Signale eine Diagnose der Vorrichtung vornimmt.

2. Vorrichtung nach Anspruch 1, **dadurch gekennzeichnet, dass** die Diagnosereflektoren (10) am Rande eines Sitzes (2) derart angeordnet sind, dass zwischen Sender, Reflektor (6) und Empfänger eine weitestgehend ungedämpfte Verbindung besteht und dass die Diagnosereflektoren (10) drahtlos oder drahtgebunden verbunden sind.

3. Vorrichtung nach Anspruch 1, **dadurch gekennzeichnet, dass** der HF-Sender und der HF-Empfänger in einem gemeinsamen Gehäuse angeordnet sind und so einen Transceiver (9) bilden, der zugleich Transceiver (9) für ein Zugangskontroll- und Fahrzeugstartsystem bildet.

4. Vorrichtung nach Anspruch 1, **dadurch gekennzeichnet, dass** der Diagnosereflektor (10) an einer Stirnseite der Rückenlehne (4), an einer Stirnseite der Sitzfläche (3) des Fahrzeugsitzes (2) oder an der Seitenfläche einer Kopfstütze (5) angeordnet ist.

5. Vorrichtung nach einem der vorhergehenden Ansprüche, **dadurch gekennzeichnet, dass** der Diagnosereflektor (10) ein modulierender Reflektor (6) ist, der ein empfangenes Signal mit einem Code moduliert zurücksendet.

6. Vorrichtung nach einem der vorhergehenden Ansprüche, **dadurch gekennzeichnet, dass** der Empfänger Teil eines Airbag-Systems ist, wodurch die Auslösung des Airbags von der erkannten Position einer Person (1) auf dem Fahrzeugsitz (2) abhängig ist.

7. Vorrichtung zum Erkennen der Position einer Person auf.einem Sitz eines Kraftfahrzeugs mit
- zumindest einem HF-Sender (12) und zumindest einem HF-Empfänger (13), wobei der HF-Sender (12) im Fahrgastraum und der HF-Empfänger (13) in einem Sitz (2) oder umgekehrt angeordnet sind und der HF-Sender (12) HF-Signale aussendet, die von dem HF-Empfänger (13) bezüglich Signallaufzeit zwischen Aussenden und Empfangen und/oder aus einem in dem empfangenen HF-Signal enthaltenen Code ausgewertet werden,
- einem oder mehreren Diagnosesendern oder -empfängern, die mit dem HF-Sender (12) oder dem HF-Empfänger (13) in Verbindung stehen, um eine Diagnose der Vorrichtung vorzunehmen.

8. Vorrichtung nach Anspruch 7, **dadurch gekennzeichnet, dass** die sitzseitigen Diagnosesender oder Diagnoseempfänger derart randseitig in dem Sitz (2) angeordnet sind, dass eine weitgehend ungedämpfte, unmittelbare Kommunikationsverbindung zwischen Sender und Empfänger besteht, und dass die HF-Sender (12) oder HF-Empfänger (13) derart fahrzeugseitig und die HF-Sender (12) oder HF-Empfänger (13) derart sitzseitig angeordnet sind, dass die Kommunikationsverbindung durch einen menschlichen Körper gedämpft wird.

9. Verfahren zum Erkennen der Position einer Person auf einem Sitz eines Kraftfahrzeugs bei dem
- von einem HF-Sender Signale ausgesendet und diese unmittelbar oder mittelbar von einem Reflektor (6) reflektiert von einem HF-Empfänger empfangnen werden,
- aus den empfangenen Signalen anhand einer Signallaufzeit und/oder einem in den Signalen enthaltenen Code und/oder dem empfangenen Intensität eine Person (1) auf einem Sitz (2) erkannt wird, und bei dem
- zeitgleich zu der Personenerkennung mittels Erfassen und Auswerten von Signallaufzeiten, empfangenen Signalintensitäten und/oder empfangenen Codierungen eine Diagnose von sitzseitigen HF-Sendern, HF-Empfängern oder Reflektoren (6) vorgenommen wird.

## Claims

1. Device for detecting the position of a person on a seat of a motor vehicle, comprising
- at least one HF transmitter, which is disposed in the passenger space and emits HF signals,
- one or more reflectors (6), which are disposed in a vehicle seat (2), wherein the reflectors (6) reflect the HF signals,
- one or more diagnostic reflectors (10), which can be connected to the reflectors (6) for the purpose of diagnosing the device, and comprising
- an HF receiver which receives HF signals and carries out a diagnosis of the device from the signal transit time between emitting and receiving and/or from a code contained in the received HF signal.

2. Device according to Claim 1, **characterized in that** the diagnostic reflectors (10) are disposed at the edge of a seat (2) such that as undamped as possible a connection exists between transmitter, reflector (6) and receiver and such that the diagnostic reflectors (10) are connected wirelessly or via wires.

3. Device according to Claim 1, **characterized in that** the HF transmitter and the HF receiver are disposed in a common housing and thus form a transceiver (9) which at the same time constitutes a transceiver (9) for an access control and vehicle starting system.

4. Device according to Claim 1, **characterized in that** the diagnostic reflector (10) is disposed on a front face of the back rest (4), on a front face of the seat base (3) of the vehicle seat (2) or on the side face of a head rest (5).

5. Device according to any one of the preceding Claims, **characterized in that** the diagnostic reflector (10) is a modulating reflector (6), which sends back a received signal modulated with a code.

6. Device according to any one of the preceding Claims, **characterized in that** the receiver is part of an airbag system, whereby the release of the airbag is dependent on the detected position of a person (1) on the vehicle seat (2).

7. Device for detecting the position of a person on a seat of a motor vehicle, comprising
- at least one HF transmitter (12) and at least one HF receiver (13), wherein the HF transmitter (12) is disposed in the passenger space and the HF receiver (13) in a seat (2) or vice versa, and the HF transmitter (12) emits HF signals which are evaluated by the HF receiver (13) with regard to signal transit time between emitting and receiving and/or from a code contained in the received HF signal,
- one or more diagnostic transmitters or receivers, which are connected to the HF transmitter (12) or the HF receiver (13) in order to carry out a diagnosis of the device.

8. Device according to Claim 7, **characterized in that** the diagnostic transmitters or diagnostic receivers in the seat are disposed at the edge of the seat (2) such that a largely undamped direct communication link exists between transmitter and receiver, and such that the HF transmitters (12) or HF receivers (13) in the vehicle and the HF transmitters (12) or HF receivers (13) in the seat are disposed such that the communication link is damped by a human body.

9. Device for detecting the position of a person on a seat of a motor vehicle, wherein
- signals are emitted by an HF transmitter and these are received by an HF receiver directly or indirectly reflected by a reflector (6),
- a person (1) on a seat (2) is detected from the received signals by means of a signal transit time and/or a code contained in the signals and/or the received intensity, and wherein
- simultaneously with the detection of the person, a diagnosis is carried out of HF transmitters, HF receivers or reflectors (6) in the seat by means of recording and evaluating signal transit times, received signal intensities and/or received codes.

## Revendications

1. Dispositif de reconnaissance de la position d'une personne sur un siège de véhicule automobile comprenant
au moins un émetteur HF qui est placé dans le compartiment passagers et qui émet des signaux HF,
un ou plusieurs réflecteurs (6) qui sont disposés dans un siège (2) du véhicule, les réflecteurs (6) réfléchissant les signaux HF,
un ou plusieurs réflecteurs de diagnostic (10) qui peuvent être reliés aux réflecteurs (6) pour effectuer le diagnostic du dispositif, et comprenant
un récepteur HF qui reçoit des signaux HF et qui effectue un diagnostic du dispositif à partir du temps de transmission des signaux entre l'émission et la réception et/ou à partir d'un code des signaux contenu dans le signal HF reçu.

2. Dispositif selon la revendication 1, **caractérisé en ce que** les réflecteurs de diagnostic (10) sont disposés sur le bord d'un siège (2) de manière à établir une liaison sensiblement non amortie entre l'émetteur, le réflecteur (6) et le récepteur et **en ce que** les réflecteurs de diagnostic (10) sont reliés sans fil ou avec fils.

3. Dispositif selon la revendication 1, **caractérisé en ce que** l'émetteur HF et le récepteur HF sont disposés dans un boîtier commun et forment ainsi un émetteur-récepteur (9) qui constitue également un émetteur-récepteur (9) pour un système de contrôle d'accès et de démarrage du véhicule.

4. Dispositif selon la revendication 1, **caractérisé en ce que** le réflecteur de diagnostic (10) est disposé soit sur un côté avant du dossier (4) ou sur un côté avant de l'assise (3) du siège du véhicule (2), soit sur la face latérale d'un appui-tête (5).

5. Dispositif selon l'une quelconque des revendications précédentes, **caractérisé en ce que** le réflecteur de diagnostic (10) est un réflecteur de modulation (6) qui renvoie un signal reçu modulé avec un code.

6. Dispositif selon l'une quelconque des revendications précédentes, **caractérisé en ce que** le récepteur fait partie d'un système de coussin d'air, le déclenchement du coussin d'air étant dépendant de la position détectée d'une personne (1) sur le siège du véhicule (2).

7. Dispositif de reconnaissance de la position d'une personne sur un siège de véhicule automobile comprenant
au moins un émetteur HF (12) et au moins un récepteur HF (13), l'émetteur HF (12) étant placé dans le compartiment passagers et le récepteur HF (13) dans un siège (2) ou vice-versa, et l'émetteur HF (12) émettant des signaux HF qui sont exploités par le récepteur HF (13) en fonction du temps de transmission des signaux entre l'émission et la réception et/ou à partir d'un code contenu dans le signal HF reçu,
un ou plusieurs émetteurs ou récepteurs de diagnostic qui communiquent avec l'émetteur HF (12) ou le récepteur HF (13) pour effectuer un diagnostic du dispositif.

8. Dispositif selon la revendication 7, **caractérisé en ce que** les émetteurs de diagnostic ou les récepteurs de diagnostic du côté du siège sont disposés du côté du bord dans le siège (2) de manière à établir une liaison directe sensiblement non amortie entre l'émetteur et le réflecteur et **en ce que** les émetteurs HF (12) ou les récepteurs HF (13) sont disposés du côté du siège du véhicule et les émetteurs HF (12) ou les récepteurs HF (13) sont disposés du côté du siège de telle manière que la liaison de communication est amortie par un corps humain.

9. Procédé de reconnaissance de la position d'une personne sur un siège de véhicule automobile, dans lequel
des signaux sont émis par un émetteur HF et ils sont reçus par un récepteur HF, directement ou indirectement réfléchis par un réflecteur (6),
une personne (1) est reconnue sur un siège (2) à partir des signaux reçus à l'aide d'un temps de transmission des signaux et/ou d'un code contenu dans les signaux et/ou de l'intensité reçue, et dans lequel
en même temps que la reconnaissance de la personne par la détection et l'exploitation des temps de transmission des signaux, des intensités de signaux reçues et/ou des codages reçus, on effectue un diagnostic des émetteurs HF, des récepteurs HF ou des réflecteurs (6) du côté du siège.
